# EUROPÄISCHE PATENTSCHRIFT

(11) **EP 1 232 050 B1**
(45) Veröffentlichungstag und Bekanntmachung des Hinweises auf die Patenterteilung: **11.02.2004**
(21) Anmeldenummer: 00949461.8
(22) Anmeldetag: 05.08.2000
(51) Int. Cl.: B29C 33/52, B29C 33/30

(54) **KERNAUSSCHMELZVERFAHREN ZUR HERSTELLUNG EINER HOHLRAUMSTRUKTUR**
LOST CORE METHOD FOR PRODUCING A HOLLOW STRUCTURE
PROCEDE A NOYAU PERDU POUR LA PRODUCTION D'UNE STRUCTURE CREUSE

(30) Priorität: 23.11.1999 DE 19956170
(43) Veröffentlichungstag der Anmeldung: 21.08.2002
(73) Patentinhaber: Mann + Hummel GmbH, 71638 Ludwigsburg (DE)
(72) Erfinder: JESSBERGER, Thomas, 71679 Asperg (DE); DOBUSCH, Heinz, 74392 Freudental (DE); SCHEERLE, Markus, 74343 Sachsenheim (DE); REHMANN, Achim, 75249 Kieselbronn (DE)
(74) Vertreter: Voth, Gerhard
(86) Internationale Anmeldenummer: PCT/EP2000/007618
(87) Internationale Veröffentlichungsnummer: WO 2001/038059

(56) Entgegenhaltungen:
- EP-A- 0 492 129
- EP-A- 0 862 978
- DE-A- 19 515 974
- JP-A- 5 200 805
- PATENT ABSTRACTS OF JAPAN vol. 017, no. 324 (M-1433), 21. Juni 1993 (1993-06-21) & JP 05 038733 A (TOTO LTD), 19. Februar 1993 (1993-02-19)

## Beschreibung

### Stand der Technik

Die Erfindung betrifft ein Kernausschmelzverfahren zur Herstellung einer Hohlraumstruktur nach der Gattung des Patentanspruches 1. Außerdem betrifft die Erfindung eine Hohlraumstruktur, die nach dem genannten Verfahren hergestellt ist nach der Gattung des Anspruches 4.

Bei dem Kernausschmelzverfahren kommen Schmelzkerne zum Einsatz, die nach urformender Herstellung der Hohlkörperstruktur ausgeschmolzen werden. Ein solcher Schmelzkern ist z. B. aus der DE 195 15 974 A1 bekannt. Gemäß Figur 2 dieses Dokuments weist der Schmelzkern 31 ein Stützelement 10 auf, welches an einer Seite aus dem Schmelzkern hinausragt. Mit Hilfe des Stützelementes kann der Schmelzkern in der Form 35 fixiert werden, um anschließend den Formkörper 40 zu spritzen. Wird der Schmelzkern 31 ausgeschmolzen, so läßt sich anschließend das Stützelement 10 problemlos entfernen.

Hierdurch lassen sich komplexe Innenraumstrukturen von Formkörpern herstellen. Insbesondere können die den Innenraum bildenden Strukturen des Schmelzkernes größere Abmessungen aufweisen, als die im hohlem Formkörper vorgesehenen Öffnungen, da das Kernmaterial nach dem Gießprozess ausgeschmolzen werden kann.

Jedoch muß der Schmelzkern vor dem Spritzgießprozess in der Form fixiert werden. Weiterhin muß das Stützelement 10, sofern es im Schmelzkem vorgesehen wird, durch eine Öffnung in der fertigen Hohlraumstruktur zu entfernen sein. Dadurch sind auch bei Verwendungen von Schmelzkemen mit Stützelementen die geometrischen Gestaltungsmöglichkeiten der Hohlraumstruktur begrenzt. Wenn dies geometrisch erforderlich ist, müssen daher zusätzliche Öffnungen in der Hohlraumstruktur vorgesehen werden, durch die die Stützelemente entfernt werden können. Allerdings müssen diese Öffnungen nach Herstellung der Hohlraumstruktur verschlossen werden. Dies erfolgt z. B. durch Deckel, die mit der Hohlraumstruktur verschweißt oder verklebt werden. Hierdurch entsteht jedoch ein zusätzlicher Montageaufwand. Außerdem wird die Funktionszuverlässigkeit der Hohlraumstruktur dadurch eingeschränkt, daß an diesem Deckel Undichtigkeiten entstehen können.

Das Dokument JP-A-05200805 offenbart ein Kernausschmelzverfahren zur Herstellung einer Hohlraumstruktur, bei welchem ein Kern in eine Spritzgußform eingelegt wird, der die Innenkontur der Hohlraumstruktur bildet. Der Kern ist über Ringe an der Spritzgußform abgestützt, wodurch eine gleichmäßige Wandstärke der Hohlraumstruktur erzeugt werden kann.

Aufgabe der Erfindung ist es daher, ein Verfahren für die Herstellung von Hohlraumstrukturen mit Schmelzkern zu schaffen, bei welchen der Montagevorgang verkürzt wird.

Diese Aufgabe wird durch die Merkmale des Patentanspruches 1 gelöst. Ferner wird gemäß Anspruch 4 eine Hohlraumstruktur beansprucht, die nach dem genannten Verfahren hergestellt ist.

### Vorteile der Erfindung

Das erfindungsgemäße Kernausschmelzverfahren, welches insbesondere für die Herstellung von Kunststoffspritzgußteilen angewandt wird, weist die allgemein bekannten Fertigungsschritte auf. Der Schmelzkern wird in der Form positioniert, und die Form wird auf den Spritzgußvorgang vorbereitet. Anschließend wird in den entstandenen Formverband ein Füllmaterial eingefüllt, welches dort erstarrt und so die Hohlraumstruktur bildet. Diese kann anschließend entformt werden, indem die Formteile entfernt werden und der Schmelzkern aus der Hohlraumstruktur ausgeschmolzen wird.

Gekennzeichnet ist die Erfindung dadurch, daß für den Schmelzkem eine besondere Positionierung vorgesehen ist. Diese besteht aus einem Einlegeteil für die Form, welches durch den Fertigungsvorgang der Hohlraumstruktur in diese integriert wird. Diese Integration erfolgt durch eine zumindest teilweise Überschneidung des Einlegeteils mit dem Hohlraum, in dem die Hohlraumstruktur in der Form entstehen soll. Auf diese Weise wird das Einlegeteil in die Hohlraumstruktur eingespritzt. Insbesondere kann das Einlegeteil dabei einen Teil der Außenwandung der Hohlraumstruktur bilden. Außen kann sich das Teil dann in der Form abstützen, während es innen für die Abstützung des Schmelzkernes sorgt.

Derartige Einlegeteile können überall positioniert werden, also auch dort, wo die Formgeometrie schwer zugängliche Bereiche aufweist. Diese Bereiche konnten bisher nicht genutzt werden, um eine Positionierung durch eine hierfür vorgesehene Öffnung hervorzurufen, weil das entsprechende Positionierwerkzeug nicht an den geforderten Platz gebracht werden konnte. Dieses Problem wird durch die erfindungsgemäße Ausgestaltung des Einlegeteils umgangen.

Das Einlegeteil kann in einer entsprechenden Aufnahme in der Form fixiert werden. Gemäß einer besonderen Ausgestaltung des Erfindungsgedankens ist jedoch auch eine Fixierung im Schmelzkern möglich. Das Einlegeteil kann z. B. in den Schmelzkern eingegossen werden, derart, daß noch Teile des Einlegeteils aus dem Schmelzkem herausragen. Diese Teile gehen dann die bleibende Verbindung des Einlegeteiles mit der Hohlraumstruktur ein.

Durch diese Variante läßt sich eine einfachere Handhabung der am Fertigungsverfahren der Hohlraumstruktur beteiligten Einzelteile erreichen. Das Einlegeteil ist in den Schmelzkern integriert, womit seine Positionierung zu diesem eindeutig definiert ist. Das Einlegeteil kann z. B. als Abstandhalter zwischen Schmelzkern und Formwand eingesetzt werden, wodurch es integraler Bestandteil der herzustellenden Wandung der Hohlraumstruktur in diesem Bereich wird. Somit wird ein Deckel unnötig, der vorgesehen werden müßte, wenn der Schmelzkern z. B. durch einen entsprechenden Dom in der Form gehalten würde. Das Einbringen des Einlegeteils in den Schmelzkern kann jedoch auf andere Weise genutzt werden, und zwar dann, wenn sie im Inneren der Hohlraumstruktur eine Bezugsfläche, z. B. als Anschlag, notwendig ist. Genau diese Bezugsfläche kann durch das Einlegeteil mitgebildet werden.

Für die Bildung komplexer Hohlraumstrukturen kann es nötig sein, mehrteilige Schmelzkerne für die Bildung der Hohlraumstruktur zu verwenden. Diese müssen nicht nur zur Form hin, sondern auch untereinander positioniert werden. Gemäß einer weiteren Ausgestaltung der Erfindung können hierfür ebenfalls Einlegeteile zur Anwendung kommen, welche in irgendeiner Weise in die fertige Hohlraumstruktur eingebunden sein müssen. Es läßt sich z. B. eine Hohlraumstruktur, bestehend aus zwei Kammern vorstellen, wobei die beiden Schmelzkerne, die die jeweiligen Hohlräume bilden, im Bereich der Trennwand durch ein Einlegeteil verbunden sind, welches nach Beendigung des Spritzgießvorgangs einen Wandteil dieser Zwischenwand bildet. Die Kerne lassen sich auch auf ein gemeinsames Teil auffädeln, was die Positionierung untereinander erleichtert.

Für das Einlegeteil kann ein anderer Werkstoff gewählt werden, als für die Hohlraumstruktur. Die Wahl des Werkstoffes für das Einlegeteil hängt natürlich auch von der Funktion ab, die dieses in der fertigen Hohlraumstruktur übernehmen soll. Es kann z. B. ein härterer Werkstoff als für die Hohlraumstruktur gewählt werden, wenn das Einlegeteil gleichzeitig als Bezugsfläche für Lager verwendet werden soll. Soll das Einlegeteil jedoch zusätzlich zur Positionierung des Schmelzkernes keine weiteren Aufgaben übernehmen, so ist es besonders vorteilhaft, das Einlegeteil aus demselben Werkstoff herzustellen, wie die Hohlraumstruktur . Dies hat zur Folge, daß das Einlegeteil an der Grenzfläche zu der sich bildenden Hohlraumstruktur angeschmolzen wird, wodurch eine besonders haltbare Verbindung entsteht. Diese Verbindung kann auch hohen Dichtungsanforderungen an die Hohlraumstruktur gerecht werden.

Eine Hohlraumstruktur, die nach dem beschriebenen Verfahren hergestellt ist, kann ein Einlegeteil aufweisen, welches zusätzlich mit einem Profil versehen ist. Dieses Profil bildet zusammen mit der Hohlraumstruktur dann eine formschlüssige Verbindung. Dadurch wird zum einen eine haltbarere Verbindung hergestellt, zum andern wird dadurch die effektive Kontaktfläche zwischen Einlegeteil und Hohlraumstruktur vergrößert. Dies kommt nicht zuletzt einer besseren Dichtwirkung an der Verbindungsstelle zugute.

Eine besondere Ausgestaltung der Hohlraumstruktur erhält man, wenn das verwendete Einlegeteil in der Hohlraumstruktur derart integriert ist, daß eine Relativbewegung zwischen diesen beiden Teilen möglich ist. Man könnte sich z. B. ein ringförmiges Einlegeteil vorstellen, welches gleichzeitig zur Lagerung einer Welle verwendet wird. Die Relativbewegung kann dahingehend ausgestaltet sein, daß ein Wechsel dieses Lagerrings möglich ist. Hierdurch werden also zwei Aufgaben erfüllt. Durch Einbringen des Lagerrings bei dem Fertigungsprozeß der Hohlraumstruktur wird zum einen der Schmelzkern positioniert und zum andern die Montage dieses Lagerrings nach Herstellung der Hohlraumstruktur eingespart. Ein Wechsel des verschlissenen Lagerrings ist dennoch möglich.

Das Einlegeteil könnte aber auch genauso ein Funktionsteil, z. B. eine Drosselklappe sein. Diese wird dann mit den Klappenflügeln in den Schmelzkem eingegossen, wobei die Klappenachse aus dem Schmelzkem herausragt und so in die Wandungen eingegossen wird. Wenn der Klappenwerkstoff nicht an dem Werkstoff der Hohlraumstruktur haftet, entsteht auf diese Weise eine drehbar gelagerte Drosselklappe, die in das Saugrohr montagegespritzt ist.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnungen

Weitere Einzelheiten der Erfindung werden in den Zeichnungen anhand von schematischen Ausführungsbeispielen beschrieben. Hierbei zeigen
- Figur 1: den Längsschnitt durch ein Saugrohr für eine Zweizylinder-Brennkraftmaschine, wobei dieses zur Hälfte ohne und zur Hälfte mit der Gußform sowie dem Schmelzkern dargestellt ist,
- Figur 2: das Detail X gemäß Figur 1 und
- Figur 3: eine alternative Ausgestaltung des Einlegeteils im Bereich Y gemäß Figur 1

### Beschreibung der Ausführungsbeispiele

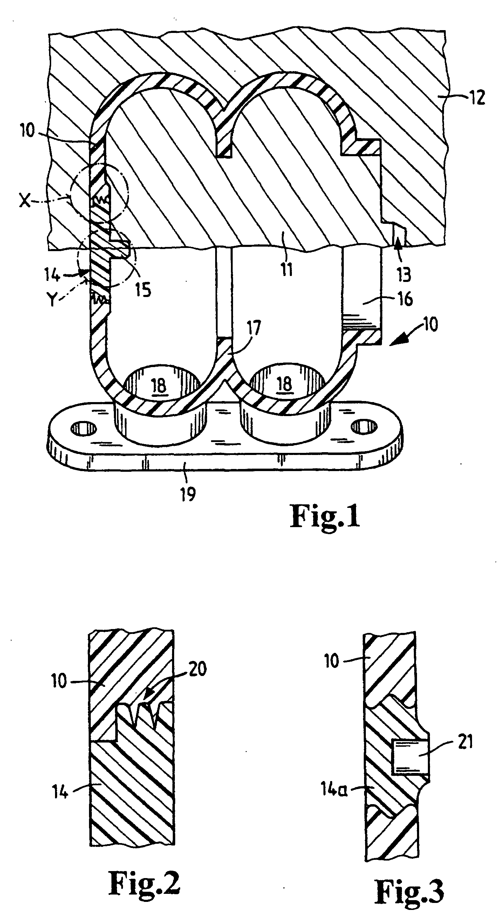

Ein Saugrohr 10 gemäß Figur 1 kann mit Hilfe des Kernausschmelzverfahrens hergestellt werden. Hierzu wird, wie im oberen Bereich gemäß Figur 1 dargestellt ein Schmelzkern 11 in eine Form 12 eingebracht. Anschließend kann der so gebildete Hohlraum zwischen Schmelzkern und Form durch Kunststoff ausgefüllt werden. Es entsteht als Hohlraumstruktur das Saugrohr 10.

Der Kern kann in bekannter Weise in ein einer Aufnahme 13 in der Form positioniert sein. Dies geschieht auf derjenigen Seite, in der das Saugrohr sowieso eine Einbauöffnung für ein Einbauteil, in diesem Fall eine Schaltwalze, benötigt. Auf der anderen Seite des Saugrohres ist eine Öffnung in der Saugrohrwandung nicht notwendig. Hier kommt ein Einlegeteil 14 zum Einsatz, welches durch einen Dorn 15 in dem Schmelzkern fixiert werden kann. Das Einlegeteil ist aus demselben Kunststoff wie das Saugrohr 10. Der Dorn 15 wird in eine Montageöffnung 16 im Schmelzkern gesteckt, wobei die Montageöffnung gegenüber dem Dom Untermaß aufweist. Dadurch kommt eine Fixierung zustande, die das Einsetzen der Einheit aus Schmelzkern und Einlegeteil in die Form erleichtert.

Die Struktur des Saugrohres wird in der unteren Bildhälfte deutlich. Die Verwendung einer Schaltwalze erfordert Hinterschneidungen in Form einer Radialrippe 17, die die Fertigung des Saugrohrs in Kernausschmelztechnik erforderlich machen. Das Einlegeteil ist nicht dargestellt. Es besteht aus einen Sammelraum, der ringförmige Kanäle im Saugrohrgehäuse bildet. Diese enden in Auslässen 18 für die Verbrennungsluft, die über einen Zylinderkopfflansch 19 mit einer nicht dargestellten Brennkraftmaschine verbunden werden können.

Wie Figur 2 zu entnehmen ist, weist das Einlegeteil an der Grenzfläche zum Saugrohrgehäuse hin ein Profil 20 auf, welches zu einer formschlüssigen Verbindung zwischen Einlegeteil und Saugrohrgehäuse führt. Sind diese aus dem selben Material, schmilzt diese Verbindung auf, wodurch ein einziges Bauteil entsteht.

In Figur 3 ist eine alternative Ausgestaltung des Einlegeteiles 14a dargestellt. Dieses bildet gleichzeitig eine Lagerung 21 für eine nicht dargestellte Welle. Die Schaltwalze für das Saugrohr könnte z. B. in dieser Lagerung drehbar gelagert sein. Der Werkstoff für das Einlegeteil kann bei dieser Anwendung vorteilhaft seiner tribologischen Eigenschaften bezüglich zum zu lagernden Bauteil gewählt werden.

## Patentansprüche

1. Kernausschmelzverfahren zur Herstellung einer Hohlraumstruktur, insbesondere eines Saugrohres (10) für eine Brennkraftmaschine, wobei bei Anwendung des Verfahrens zumindest die folgenden Schritte durchlaufen werden:
- Positionieren eines Schmelzkerns (11) in eine Form (12),
- Ausfüllen des so entstandenen Formverbandes mit einem Füllmaterial, welches anschließend erstarrt und so die Hohlraumstruktur bildet,
- Entfernen der Form und
- Ausschmelzen des Schmelzkerns aus der Hohlraumstruktur,
wobei zur Postitionierung des Schmelzkerns ein Einlegeteil (14, 14a) verwendet wird, welches durch zumindest teilweise Umhüllung durch das Füllmaterial integraler Bestandteil der Hohlraumstruktur wird, **dadurch gekennzeichnet, dass** das Einlegeteil in den Schmelzkern eingegossen ist, wobei Teile des Einlegeteils aus dem Schmelzkern herausragen.

2. Kernausschmelzverfahren nach Anspruch 1, **dadurch gekennzeichnet, dass** mehrere Schmelzkerne für die Bildung der Hohlraumstruktur zum Einsatz kommen und diese durch eine Einlegeteil zueinander positioniert werden.

3. Kernausschmelzverfahren nach Anspruch 1 oder 2, **dadurch gekennzeichnet, dass** für das Einlegeteil derselbe Werkstoff gewählt wird wie für die Hohlraumstruktur.

4. Hohlraumstruktur, **dadurch gekennzeichnet, dass** diese nach dem Verfahren gemäß einem der Ansprüche 1 - 3 hergestellt ist und das Einlegeteil (14, 14a) ein Profil aufweist, welches mit der Hohlraumstruktur eine formschlüssige Verbindung bildet.

5. Hohlraumstruktur, **dadurch gekennzeichnet, dass diese** nach dem Verfahren gemäß einem der Ansprüche 1 - 3 hergestellt ist und eine Relativbewegung zwischen dem Einlegeteil (14a) und der Hohlraumstruktur möglich ist.

6. Hohlraumstruktur nach Anspruch 4 oder 5, **dadurch gekennzeichnet, dass** das Einlegeteil (14, 14a) einen Teil der Außenwand der Hohlraumstruktur bildet.

## Claims

1. Core melting-out (investment casting) method for producing a hollow structure, more especially an induction manifold (10) for an internal combustion engine, at least the following steps being taken to accomplish the method;
- positioning a meltable core (11) in a mould (12),
- filling the mould assembly, thus produced, with a filling material which subsequently hardens and thus forms the hollow structure,
- removing the mould, and
- melting-out the meltable core from the hollow structure,
an insert (14, 14a) being used to position the meltable core, which insert becomes an integral component of the hollow structure by being at least partially surrounded by the filling material, **characterised in that** the insert is incorporated in the meltable core, parts of the insert protruding from the meltable core.

2. Core melting-out method according to claim 1, **characterised in that** a plurality of meltable cores are used to form the hollow structure, and they are positioned relative to one another by an insert.

3. Core melting-out method according to claim 1 or 2, **characterised in that** the same material is selected for the insert as for the hollow structure.

4. Hollow structure, **characterised in that** it is produced by the method according to one of claims 1 - 3, and the insert (14, 14a) has a profile which forms a form-fitting connection with the hollow structure.

5. Hollow structure, **characterised in that** it is produced by the method according to one of claims 1 - 3, and a relative movement between the insert (14a) and the hollow structure is possible.

6. Hollow structure according to claim 4 or 5, **characterised in that** the insert (14, 14a) forms a part of the outer wall of the hollow structure.

## Revendications

1. Procédé de coulée à noyau perdu pour la production d'une structure creuse, notamment d'un tube d'admission (10) d'un moteur à combustion interne, la mise en oeuvre de ce procédé comportant au moins les étapes suivantes :
- positionnement d'un noyau perdu (11) dans un moule (12),
- remplissage de l'ensemble de moulage ainsi constitué par un matériau de remplissage qui est ensuite durci en formant la structure creuse,
- extraction du moule, et
- élimination par fusion du noyau perdu situé dans la structure creuse,
en utilisant pour positionner le noyau perdu, une pièce d'insertion (14, 14a) qui, en étant enveloppée au moins partiellement par le matériau de remplissage, devient un constituant intégral de la structure creuse,
**caractérisé en ce que**
la pièce d'insertion est moulée dans le noyau perdu, et présente des parties en saillie par rapport à celui-ci.

2. Procédé de coulée selon la revendication 1,
**caractérisé en ce que**
pour former la structure creuse, on utilise plusieurs noyaux perdus qui sont positionnés les uns par rapport aux autres par la pièce d'insertion.

3. Procédé de coulée selon la revendication 1 ou 2,
**caractérisé en ce que**
le matériau choisi pour réaliser la pièce d'insertion est le même que celui choisi pour la structure creuse.

4. Structure creuse,
**caractérisée en ce qu'**
elle est fabriquée selon le procédé décrit dans une des revendications 1 à 3, la partie d'insertion (14, 14a) présentant un profil assurant une liaison par combinaison de formes avec la structure creuse.

5. Structure creuse,
**caractérisée en ce qu'**
elle est fabriquée selon le procédé décrit dans une des revendications 1 à 3, un déplacement relatif de la partie d'insertion (14a) et de la structure creuse étant possible.

6. Structure creuse selon la revendication 4 ou 5,
**caractérisée en ce que**
la pièce d'insertion (14, 14a) constitue une partie de la paroi externe de la structure creuse.
